# EUROPEAN PATENT APPLICATION

(11) **EP 1 797 798 A1**
(43) Date of publication of application: **20.06.2007**
(21) Application number: 06026255.7
(22) Date of filing: 19.12.2006
(51) Int. Cl.: A47J 27/04

(54) **Two-in-one steam and roast cooker**

(30) Priority: 19.12.2005 CN 200520145102 U
(71) Applicant: View Deluxe Company Limited, Kwai Chung, New Territories (HK)
(72) Inventor: Cheung, Wah Hing, c/o View Deluxe Company Ltd., Castle Peak Road Kwai Chung New Territories (HK)
(74) Representative: Zambardino, Umberto

(57) **Abstract**

This present invention relates to a novel two-in-one steam and roast cooker. The cooker includes a food chamber with steam holes on its bottom; a steam chamber capable of storing water under the food chamber; and a heater in the steam chamber under the food chamber. In this simple and compact cooker, the heater not only produces steam to allow food to be fully cooked, it also produces high temperature (up to 200 - 300° C) for roasting food like in an oven. Furthermore, the cooker components can be simply put together to make the cooker easy to assemble, disassemble and clean.

## Description

### Field of the invention

This present invention relates to a novel two-in-one steam and roast cooker.

### Background of the invention

It is well known that steam cooking may keep food's original tastes and roast cooking may increase their flavors. Among the steam or roast cookers currently available in the market, they either apply electric heating or applies gasoline heating; however, they cannot make it possible to steam and roast food in the same cooker. Usually, users have to steam or roast food separately, which is high-cost, space consuming and inconvenient. Furthermore, complicated heating device for existing steam or roast cooker makes installation and dissembling and cleaning difficult.

### Summary of the invention

The objective of the present inventions is to overcome the above shortcomings and provide a novel simple two-in-one steam and roast cooker, which is easy to clean and saves energy.

In order to achieve the above objective, the present invention includes:
(1) a food chamber with steam holes on its bottom; (2) a steam chamber, capable of storing water under the food chamber, has its ladder-structure bottom with upper and lower flat surface, and height of its upper flat surface is set as the water level; and (3) an inclined-spiral heater, which is in the steam chamber under the food chamber, and lies above the water level of steam chamber, or includes an upper heating element and a lower heating element which is below the water level of steam chamber.

In this simple and compact cooker, the heater not only produces steam to allow food to be fully cooked, it also produces high temperature (up to 200 - 300° C) for roasting food like in an oven. Furthermore, the cooker components can be simply put together to make the cooker easy to assemble, disassemble and clean.

### Brief description of the figures

FIG. 1 is a perspective exploded view of components for the present invention.
FIG. 2 is a cross-sectional schematic view of the assembly of the present invention.
FIG. 3 is a diagram showing air and steam movements inside the cooker of the present invention.

### Detailed description of the preferred embodiment

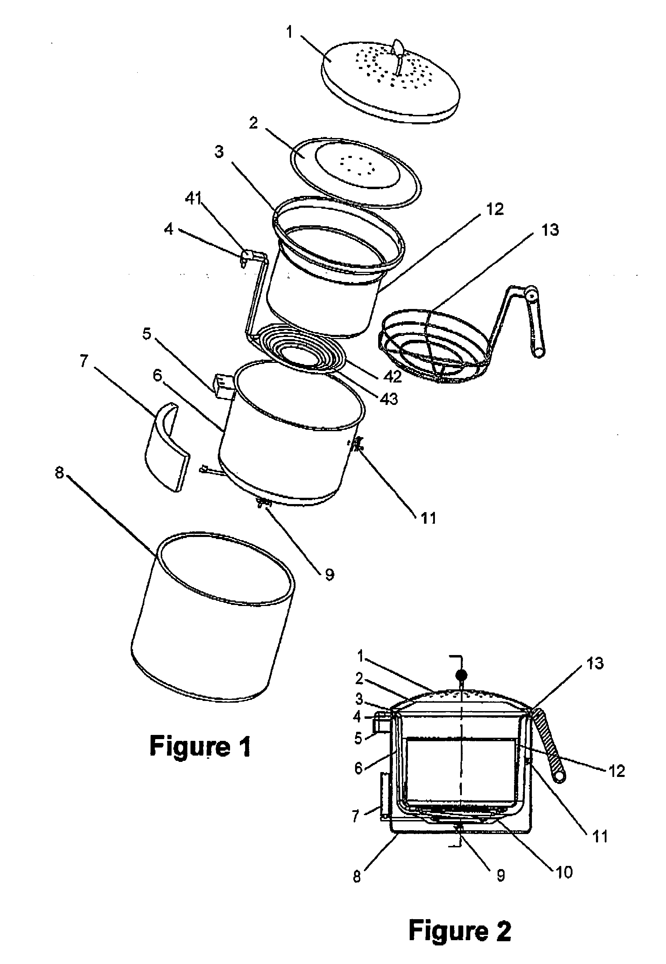

Referring to FIG. 1 and FIG. 2, in the present invention of a two-in-one steam and roast cooker, external cover**1**, food chamber **12** and heater **4** are inside the stream chamber **6.** Steam chamber **6** is capable of storing water together with external shell **8** and the foregoing components are set from top to bottom in order. The sizes of food chamber **12,** steam chamber **6** and external shell **8** increase gradually, and thus they are nested together.

The upper-coverage component consists of (1) external cover **1,** covering the external shell, from which it is easy to take out all the inside components for cleaning; (2) internal cover **2,** which covers on chamber **6,** may prevent heat loss and hold the of external shell **8** at lower temperature and keep the temperature of cooker, as well as making it for cleaning; and (3) seal ring **3** of silica gel embedded in outer edge of internal cover **2** to further hold the temperature of the cooker. Since totally sealed upper-coverage component may cause explosion, proper number of small gas holes on external cover **1** and internal cover **2** prevent explosion and keep temperature to roast food as in oven as well.

The food chamber **12** with steam holes on its bottom is used to hold food. Tray **13,** holding food chamber **12** under it, connects with a handle through a perpendicular bracket. The handle extends outside external shell **8,** which makes it easy to take the food chamber 12 out of steam chamber **6,** thus providing a convenient and safe usage of the cooker.

The bottom of steam chamber **6** has ladder structure with upper and lower flat surface, and height of its upper flat surface is set as water level **10,** which is the position of water-input hole connecting with water tank **7** on the outer side of external shell **8.** Water in this waterproof tank can be taken out freely.

In this application example, the heater **4** includes plug **41,** upper heating element **42,** which produces high temperature for roasting during suspension at its upper position, and lower heating element **43** below water level **10** of steam chamber to produce steam by heating in water. The best compact heater of inclined-spiral shape not only produces different heating effects but also saves space maximally. An alternative way is for the heater **4** only applies upper heating element **42** to produce steam by heating steam chamber **6** directly by means of heat radiation. Plug-pull style by connecting the plug **41** through perpendicular wire, extending outside of steam chamber **6,** to power plug 5 on external wall of steam chamber makes it easy to dissemble and clean whole heater **4.**

Temperature-control device on outer wall of steam chamber **6** consists of temperature controller **9** located at its bottom to prevent water drying up and another temperature controller **11** on the side wall to control cooking temperature (steam or roast temperature).

The assembled cooker is shown as FIG. 2. Upper-coverage component, food chamber **12,** heater **4,** steam chamber **6** and external shell **8** can be simply stacked from top to bottom in the order shown, which makes it convenient to assemble, dissemble and clean. The heater **4** and food chamber **12** are sealed in steam chamber **6** which has metal sealed bottom. Space between the opening of steam chamber **6** and internal cover **2** is sealed by seal ring **3.** An isolation layer between steam **chamber 6** and external shell **8** effectively prevent heat leaking and injury, Based on little heat loss in this system, low power may produce the same temperature as high power, so energy is saved.

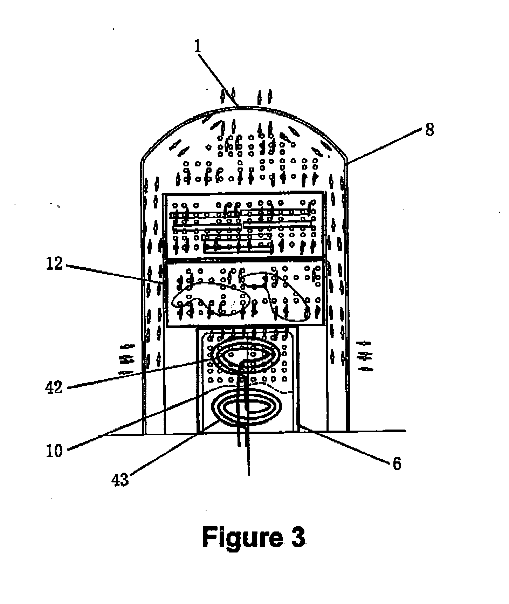

In this system, water stored in water tank **7** is input to steam chamber **6** automatically. Referring to FIG. 3, heating from heater 4 make lower heating element **43** under water level **10** of steam chamber to heat water into steam, then upper heating element **42** makes steam to higher temperature to resemble oven roasting. Arrows in FIG. 3 show direction of steam movement in food chamber **12** to steam food inside and finally out from holes of upper cover components. Air movement in isolation layer between steam chamber **6** and external shell **8** is also shown.

If water-input hole touches air caused by water of steam chamber **6** being lower than water level **10,** the water in water tank **7** will go into steam chamber 6 through the hole until the water level is as high as to cover water-input hole, then water flow stop. Thus water may move into steam chamber **6** again and again. If there is no water in steam chamber **6** and the temperature keeps increasing, for example 120°C, the temperature control device will interrupt the power to stop the temperature increase to ensure safety.

The present invention may have different external designs with practical requirements, such as different shapes as rectangle, circle, square, ellipse, etc. In addition, all the internal designs may be modified correspondingly.

It is to be understood that the embodiments depicted in the patent specification herein are not intended to be, nor should it be deemed to be, limited thereby and such other modifications or embodiments without departing from the spirit and essential characteristics of such invention herein are particularly reserved especially as they fall within the breadth and scope of the claims here appended.

## Claims

1. A two-in-one steam and roast cooker comprising:
- a food chamber with steam holes on the bottom;
- a steam chamber capable of storing water under said food chamber; and
- a heater in said steam chamber under said food chamber.

2. The two-in-one steam and roast cooker of claim 1, wherein said heater lies above the water level of said steam chamber, or comprises of an upper heating element and a lower heating element which is set below said water level of said steam chamber.

3. The two-in-one steam and roast cooker of claim 2, wherein said heater is inclined-spiral in shape.

4. The two-in-one steam and roast cooker of claim 1, wherein said heater is provided with a plug connecting to power plug outside said steam chamber.

5. The two-in-one steam and roast cooker of claim 1, wherein the bottom of said steam chamber has ladder structure with upper and lower flat surface, and the height of the upper flat surface is set as the water level mark.

6. The two-in-one steam and roast cooker of claim 1, wherein a water-input hole is provided at the water level position of said steam chamber connecting to a water tank,

7. The two-in-one steam and roast cooker of claim 1, wherein said steam chamber is provided with a temperature control device.

8. The two-in-one steam and roast cooker of claim 1, wherein said steam chamber nests in a heat isolation shell.

9. The two-in-one steam and roast cooker of claim 1, wherein a tray with a handle to hold said food chamber is provided under said food chamber.

10. The two-in-one steam and roast cooker of claim 1, wherein an upper-coverage component with seal ring is provided to cover said food chamber and steam chamber.
